# EUROPÄISCHE PATENTSCHRIFT

(11) **EP 3 372 736 B1**
(45) Veröffentlichungstag und Bekanntmachung des Hinweises auf die Patenterteilung: **07.10.2020**
(21) Anmeldenummer: 17210440.8
(22) Anmeldetag: 22.12.2017
(51) Int. Cl.: E03B 7/12, F16L 25/01, F16L 41/02, F16L 51/00, F16L 53/38

(54) **VERBINDUNGSAGGREGAT**
CONNECTION UNIT
APPAREIL DE LIAISON

(30) Priorität: 06.03.2017 DE 202017101274 U
(43) Veröffentlichungstag der Anmeldung: 12.09.2018
(73) Patentinhaber: TI Automotive (Fuldabrück) GmbH, 34277 Fuldabrück (DE)
(72) Erfinder: HÄCKEL, Andre, 34513 Waldeck (DE); WACHSMUTH, Frank, 37520 Osterode (DE)
(74) Vertreter: Andrejewski - Honke Patent- und Rechtsanwälte Partnerschaft mbB

(56) Entgegenhaltungen:
- DE-A1-102007 016 789
- DE-A1-102009 040 012
- DE-U1-202007 013 316
- US-A1- 2004 195 828

## Beschreibung

Die Erfindung betrifft ein Verbindungsaggregat mit einem Verbinder und zumindest einer an den Verbinder angeschlossenen Fluidleitung, insbesondere zur Durchleitung einer Harnstofflösung bzw. einer wässrigen Harnstofflösung, wobei der Verbinder zumindest zwei Anschlussenden sowie einen die Anschlussenden miteinander verbindenden Verbinderabschnitt aufweist.

Verbindungsaggregate der vorstehend beschriebenen Art sind aus der Praxis in unterschiedlichen Ausführungsformen bekannt, siehe beispielsweise DE-U-20 2007 013 316 oder DE-A-10 2009 040 012. Bei Verbindern und Fluidleitungen für die Durchleitung von wässrigen Medien besteht das Problem, dass bei niedrigen Temperaturen das wässrige Medium unter Volumenausdehnung gefriert. Aufgrund dieser Volumenausdehnung bzw. des damit einhergehenden Druckes können die Verbinder und/oder Fluidleitungen beschädigt oder sogar vollständig zerstört werden. Das gilt vor allem auch für Verbinder und Fluidleitungen die zur Durchleitung von wässrigen Harnstofflösungen eingesetzt werden. Solche wässrigen Harnstofflösungen werden bekanntlich im Rahmen sogenannter SCR-Verfahren (Selective Catalytic Reduction) in Kraftfahrzeugen verwendet, um den Stickstoffgehalt von Abgasen zu reduzieren. Vor allem bei solchen wässrigen Harnstofflösungen tritt das oben geschilderte Problem auf. Die wässrige Harnstofflösung gefriert bei niedrigen Temperaturen unter Volumenausdehnung und durch entsprechende Druckerhöhung können Verbinder und Fluidleitungen des SCR-Systems beschädigt oder vollständig zerstört werden. Grundsätzlich ist es bekannt solche Verbinder und/oder die angeschlossenen Fluidleitungen zu beheizen. Nichtsdestoweniger ist eine zusätzliche Abhilfe beim Auftreten eines Gefrieren der Lösungen erwünscht.

Der Erfindung liegt das technische Problem zugrunde, ein Verbindungsaggregat der eingangs genannten Art anzugeben, bei dem die vorstehend geschilderten Probleme und Nachteile effektiv vermieden werden können.

Zur Lösung dieses technischen Problems lehrt die Erfindung ein Verbindungsaggregat wie in Anspruch 1 definiert. Bevorzugte Ausgestaltungen sind in den abhängigen Ansprüchen definiert.

Besondere Bedeutung kommt im Rahmen der Erfindung einem Verbindungsaggregat mit einem Verbinder und zumindest einer an den Verbinder angeschlossenen Fluidleitung zu, welches Verbindungsaggregat im Rahmen eines SCR-Systems in Kraftfahrzeugen für die Durchleitung einer wässrigen Harnstofflösung eingesetzt wird. Das erfindungsgemäße Verbindungsaggregat ist grundsätzlich vor allem für Kraftfahrzeuganwendungen geeignet und kann auch für andere Fluidsysteme in Kraftfahrzeugen eingesetzt werden.

Gemäß besonders bevorzugter Ausführungsform der Erfindung weist der erfindungsgemäße Verbinder zumindest drei Anschlussenden auf und empfohlenermaßen genau drei Anschlussenden. Der Verbinderabschnitt verbindet dabei die zumindest drei Anschlussenden bzw. die drei Anschlussenden miteinander. Eine besonders empfohlene Ausführungsform der Erfindung ist dadurch gekennzeichnet, dass jeweils zwei der drei Anschlussenden des Verbinders einen Winkel von 120° bzw. von etwa 120° einschließen. Bewährtermaßen weist der Verbinder drei solcher Anschlussenden auf und ist bevorzugt Y-förmig ausgestaltet. Grundsätzlich kann der Verbinder aber auch beispielsweise T-förmig ausgebildet sein. Zweckmäßigerweise ist der Verbinder als einstückiges Kunststoffteil, insbesondere als Spritzgussteil ausgeführt.

Es liegt im Rahmen der Erfindung, dass ein Fluidleitungsende einer an den erfindungsgemäßen Verbinder angeschlossenen Fluidleitung sowohl in das Anschlussende des Verbinders als auch in den Verbinderabschnitt des Verbinders eingreift. Vorzugsweise greift ein Fluidleitungsende einer Fluidleitung an jedem Anschlussende des Verbinders sowohl in das Anschlussende als auch in den Verbinderabschnitt des Verbinders ein. Bei der bevorzugten Ausführungsform mit drei Anschlussenden des Verbinders und bei empfohlenermaßen Y-förmig ausgestaltetem Verbinder ragen die Fluidleitungsenden von drei an die Anschlussenden angeschlossenen Fluidleitungen jeweils in das Anschlussende und in den Verbinderabschnitt des Verbinders, so dass zweckmäßigerweise die Fluidleitungen gleichsam sternförmig von einem Mittelabschnitt des Verbinderabschnittes aus nach außen ragen. Vorzugsweise sind die drei Fluidleitungen bzw. die drei Fluidleitungsenden konzentrisch bezüglich eines Mittelpunktes des Verbinders bzw. des Verbinderabschnittes angeordnet. Eine besonders empfohlene Ausführungsform des erfindungsgemäßen Verbindungsaggregates ist dadurch gekennzeichnet, dass an zumindest zwei Anschlussenden - vorzugsweise an jedem Anschlussende - des Verbinders ein Fluidleitungsende einer Fluidleitung in das zugeordnete Anschlussende eingreift und dass im Bereich jedes Fluidleitungsendes zumindest ein Kompensationselement - bevorzugt ein Kompensationselement - an die Fluidleitung bzw. an das Fluidleitungsende angeschlossen ist. Dabei ist zweckmäßigerweise jedes Kompensationselement fest mit der Fluidleitung bzw. mit dem Fluidleitungsende verbunden. Es liegt im Rahmen der Erfindung, dass jedes Kompensationselement über jeweils zumindest ein Federelement - bevorzugt über jeweils ein Federelement - an zumindest einem Abstützanschlag - vorzugsweise an einem Abstützanschlag abstützbar ist bzw. abgestützt wird. Bei dem Federelement handelt es sich nach empfohlener Ausführungsform der Erfindung um eine Schraubenfeder. Grundsätzlich können im Rahmen der Erfindung aber auch andere Arten von Federelementen eingesetzt werden. Ein solches Federelement - bevorzugt eine solche Schraubenfeder - ist bewährtermaßen zwischen Kompensationselement und Abstützanschlag angeordnet und das Federelement bzw. die Schraubenfeder kann mit einem Ende an dem Kompensationselement anliegen und mit dem anderen Ende an dem Abstützanschlag anliegen. Vorzugsweise umgibt das Federelement bzw. die Schraubenfeder die Fluidleitung bzw. das Fluidleitungsende. Es liegt weiterhin im Rahmen der Erfindung, dass der Abstützanschlag kein Bestandteil der Fluidleitung bzw. des Fluidleitungsendes ist und zweckmäßigerweise nicht fest mit der Fluidleitung bzw. mit dem Fluidleitungsende verbunden ist.

Erfindungsgemäss ist ein den Verbinder aufnehmendes Verbindergehäuse vorgesehen, wobei neben dem Verbinder zumindest ein in ein Anschlussende des Verbinders eingreifendes Fluidleitungsende in dem Verbindergehäuse angeordnet und vorzugsweise sind alle in ein Anschlussende des Verbinders eingreifenden Fluidleitungsenden in dem Verbindergehäuse angeordnet. Erfindungsgemäss ist das im Bereich eines Fluidleitungsendes angeschlossene Kompensationselement mitsamt seinem zugeordneten Federelement ebenfalls in dem Verbindergehäuse aufgenommen. Gemäß bevorzugter Ausführungsform der Erfindung ist jedem Anschlussende des Verbinders ein Gehäuseanschlussabschnitt zugeordnet, in welchen die dem Anschlussende des Verbinders zugeordnete Fluidleitung einfasst. Bei einer bevorzugten Ausgestaltung des Verbinders mit drei Anschlussenden weist zweckmäßigerweise auch das Verbindergehäuse drei zugeordnete Gehäuseanschlussabschnitte auf. Bei bewährter Y-förmiger Ausgestaltung des Verbinders ist zweckmäßigerweise auch das Verbindergehäuse Y-förmig ausgebildet. Grundsätzlich kann das Verbindergehäuse auch T-förmig oder ähnlich ausgestaltet sein. - Das Verbindergehäuse kann gemäß einer Ausführungsvariante aus miteinander kombinierbaren Teilschalen, insbesondere aus zwei miteinander kombinierbaren Halbschalen bestehen.

Es liegt im Übrigen im Rahmen der Erfindung, dass eine an den Verbinder angeschlossene Fluidleitung eine Leitungsumhüllung aufweist, die insbesondere als Wellrohr ausgeführt sein kann. Zweckmäßigerweise greift auch die Leitungsumhüllung - insbesondere ein Wellrohr - einer Fluidleitung ebenfalls in den zugeordneten Gehäuseanschlussabschnitt des Verbindergehäuses ein. Dabei kann die Leitungsumhüllung - insbesondere das Wellrohr - der jeweiligen Fluidleitung an dem Gehäuseanschlussabschnitt des Verbindergehäuses fixiert sein, beispielsweise durch einen Formschluss an dem Gehäuseanschlussabschnitt fixiert sein.

Eine sehr empfohlene Ausführungsform des erfindungsgemäßen Verbindungsaggregates zeichnet sich dadurch aus, dass ein Abstützanschlag für ein Kompensationselement in dem Verbindergehäuse angeordnet ist und nach besonders bevorzugter Ausführungsform der Erfindung Bestandteil des Verbindergehäuses ist. Zweckmäßigerweise ist ein Abstützanschlag für ein Kompensationselement einstückig mit dem Verbindergehäuse verbunden.

Es liegt im Rahmen der Erfindung, dass ein Abstützanschlag für ein Kompensationselement als quer, vorzugsweise als senkrecht bzw. als im Wesentlichen senkrecht zur Längsrichtung der zugeordneten Fluidleitung bzw. zur Längsrichtung des zugeordneten Fluidleitungsendes orientiertes Bauelement ausgestaltet ist. Vorzugsweise ist ein Abstützanschlag für ein Kompensationselement als quer, vorzugsweise als senkrecht bzw. als im Wesentlichen senkrecht zur Längsrichtung der zugeordneten Fluidleitung bzw. des zugeordneten Fluidleitungsendes angeordnetes Gehäuseelement - insbesondere als Gehäusewandung - des Verbindergehäuses ausgebildet. Zweckmäßigerweise ist ein Abstützanschlag für ein Kompensationselement in einem Gehäuseanschlussabschnitt des Verbindergehäuses angeordnet und dieser Abstützanschlag ist bevorzugt als quer, zweckmäßigerweise als senkrecht bzw. als im Wesentlichen senkrecht zur Längsrichtung des Gehäuseanschlussabschnittes angeordnetes Gehäuseelement - insbesondere als Gehäusewandung - des Verbindergehäuses ausgestaltet. Wenn das Verbindergehäuse gemäß einer bevorzugten Ausführungsform in Form von zwei Halbschalen ausgebildet ist, weist jede Halbschale zweckmäßigerweise ein Gehäusewandungsteil auf, wobei sich bei Kombination der Halbschalen zwei dieser Gehäusewandungsteile zu einer einen Abstützanschlag bildenden Gehäusewand ergänzen.

Es liegt im Rahmen der Erfindung, dass ein Kompensationselement fest mit dem zugeordneten Fluidleitungsende bzw. fest mit der zugeordneten Fluidleitung verbunden ist. Zweckmäßigerweise ist dabei das Kompensationselement stoffschlüssig und/oder formschlüssig und/oder kraftschlüssig mit dem zugeordneten Fluidleitungsende bzw. mit der zugeordneten Fluidleitung verbunden. Nach einer empfohlenen Ausführungsform der Erfindung ist ein Kompensationselement mit dem zugeordneten Fluidleitungsende bzw. mit der zugeordneten Fluidleitung verschweißt. Es liegt im Rahmen der Erfindung, dass ein Kompensationselement aus der Außenoberfläche des zugeordneten Fluidleitungsendes bzw. der zugeordneten Fluidleitung herausragt. Eine besonders empfohlene Ausführungsform der Erfindung ist dadurch gekennzeichnet, dass ein Kompensationselement einen quer, insbesondere senkrecht bzw. im Wesentlichen senkrecht zur Längsrichtung des zugeordneten Fluidleitungsendes bzw. der zugeordneten Fluidleitung angeordneten Kompensationsflansch aufweist bzw. dass das Kompensationselement aus einem solchen Kompensationsflansch besteht bzw. im Wesentlichen besteht. Dieser Kompensationsflansch ist zweckmäßigerweise über das zumindest eine Federelement - vorzugsweise über die zumindest eine Schraubenfeder - an dem Abstützanschlag abstützbar. Zweckmäßigerweise ist der Kompensationsflansch rotationssymmetrisch bezüglich der zugeordneten Fluidleitung bzw. des zugeordneten Fluidleitungsendes ausgestaltet. Erfindungsgemäss ist das Kompensationselement - bevorzugt der Kompensationsflansch - außerhalb des Verbinders und innerhalb des Verbindergehäuses angeordnet.

Zweckmäßigerweise ist das Kompensationselement bzw. der Kompensationsflansch unmittelbar bzw. mit geringem Abstand vor dem Ende eines Verbinderabschnittes des Verbinders angeordnet. Es liegt im Rahmen der Erfindung, dass sich das Kompensationselement bzw. der Kompensationsflansch an dem Stirnende eines Verbinderabschnittes des Verbinders abstützen kann.

Bei einer Druckerhöhung in dem Verbinder bzw. in dem Mittelabschnitt des Verbinders und insbesondere bei Ausbildung eines Eisdruckes in dem Verbinder bzw. in dem Mittelabschnitt des Verbinders wird ein in den Verbinder bzw. bis zum Mittelabschnitt des Verbinders ragendes Fluidleitungsende gleichsam aus dem Verbinder bzw. aus dem zugeordneten Verbinderabschnitt herausgedrückt und dadurch kann das an dem jeweiligen Fluidleitungsende angeschlossene Kompensationselement auf das Federelement bzw. auf die Schraubenfeder einwirken, so dass das Fluidleitungsende bzw. das daran angeschlossene Kompensationselement gegen die Rückstellkraft des Federelementes bewegt wird. Auf diese Weise kommt es zu einer Vergrößerung des Innenvolumens in dem Verbinder bzw. in dem jeweiligen Verbinderabschnitt.

Bei Nachlassen des Druckes im Innenraum des Verbinders kann entsprechend unter Einwirkung der Rückstellkraft des Federelementes das Kompensationselement und das jeweilige Fluidleitungsende in seine ursprüngliche Position zurückgelangen.

Eine besonders bevorzugte Ausführungsform der Erfindung ist dadurch gekennzeichnet, dass eine an den Verbinder angeschlossene Fluidleitung als beheizbare Fluidleitung ausgebildet ist. Dabei kann die Fluidleitung durch zumindest eine um die Fluidleitung gewickelte Heizkomponente - beispielsweise durch zumindest einen um die Fluidleitung gewickelten Heizdraht - beheizt werden. Die Heizkomponente bzw. der Heizdraht kann dabei spiralförmig um die Fluidleitung gewickelt sein. Weiterhin liegt es im Rahmen der Erfindung, dass der Verbinder als beheizbarer Verbinder ausgebildet ist. Auch der Verbinder kann grundsätzlich mittels eines Heizelementes beheizt werden, das um den Verbinder bzw. um die Verbinderabschnitte des Verbinders gewickelt ist. Nach einer besonders bevorzugten Ausführungsform der Erfindung ragt von einer beheizten Fluidleitung her ein Heizelement in das Innere des Verbinders bzw. in das Innere eines Verbinderabschnittes. Bei diesem Heizelement kann es sich insbesondere um eine Schraubenfeder handeln, die sich von der beheizten Fluidleitung aus in das Innere des Verbinders bzw. in das Innere eines Verbinderabschnittes des Verbinders erstreckt. Dabei wird das in die Fluidleitung ragende Heizelement - insbesondere die in die Fluidleitung ragende Schraubenfeder - aufgrund der Beheizung der Fluidleitung erwärmt und das weiterhin in den Verbinderabschnitt des Verbinders ragende Heizelement - insbesondere die Schraubenfeder - leitet gleichsam die Wärme zur Beheizung des Verbinders in den Verbinderabschnitt weiter. - Nach einer empfohlenen Ausführungsform umgibt ein Kompensationselement ein zur Beheizung des Verbinders vorgesehenes Heizelement. Das gilt insbesondere für das vorstehend beschriebenen Heizelement, das sich ausgehend von der beheizten Fluidleitung in den Verbinder erstreckt bzw. in den Verbinderabschnitt des Verbinders erstreckt.

Der Erfindung liegt die Erkenntnis zugrunde, dass mit einem erfindungsgemäßen Verbindungsaggregat insbesondere temperaturbedingte Volumenausdehnungen eines fluiden Mediums aufgrund des erfindungsgemäß vorgesehenen Kompensationselementes bzw. aufgrund der erfindungsgemäß vorgesehenen Kompensationselemente einfach, funktionssicher und effektiv ausgeglichen werden können. Beschädigungen der Bauelemente des erfindungsgemäßen Verbindungsaggregates können problemlos vermieden werden und es findet bei Volumenausdehnungen bzw. bei Auftreten eines Eisdruckes eine gleichsam schonende Beaufschlagung der einzelnen Bauelemente statt. Problemlos können die beteiligten Baukomponenten bei Nachlassen des entsprechenden Druckes bzw. bei Nachlassen der Volumenausdehnungen reversibel wieder in ihre Ausgangszustände zurückkehren. Das erfindungsgemäße Verbindungsaggregat ist vor allem für SCR-Systeme in Kraftfahrzeugen geeignet, die mit wässrigen Harnstofflösungen betrieben werden. Es ist auch hervorzuheben, dass ein erfindungsgemäßes Verbindungsaggregat relativ wenig komplex und wenig aufwendig aufgebaut ist und mit verhältnismäßig geringen Kosten realisierbar ist.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf ein erfindungsgemäßes Verbindungsaggregat im Schnitt,
- Fig. 2: einen vergrößerten Ausschnitt A aus Fig. 1 und
- Fig. 3: eine schematische Darstellung der Funktionsweise des erfindungsgemäßen Verbindungsaggregates.

Die Figuren zeigen eine bevorzugte Ausführungsform eines erfindungsgemäßen Verbindungsaggregates mit einem Verbinder 1 und mit drei an den Verbinder angeschlossenen Fluidleitungen 2. Der Verbinder 1 und die daran angeschlossenen Fluidleitungen 2 mögen im Ausführungsbeispiel Bestandteil eines SCR-Systems eines Kraftfahrzeuges sein und werden von einer wässrigen Harnstofflösung durchströmt. Grundsätzlich kann das erfindungsgemäße Verbindungsaggregat aber auch für andere Anwendungszwecke eingesetzt werden, und zwar insbesondere für fluide Medien in Kraftfahrzeugen.

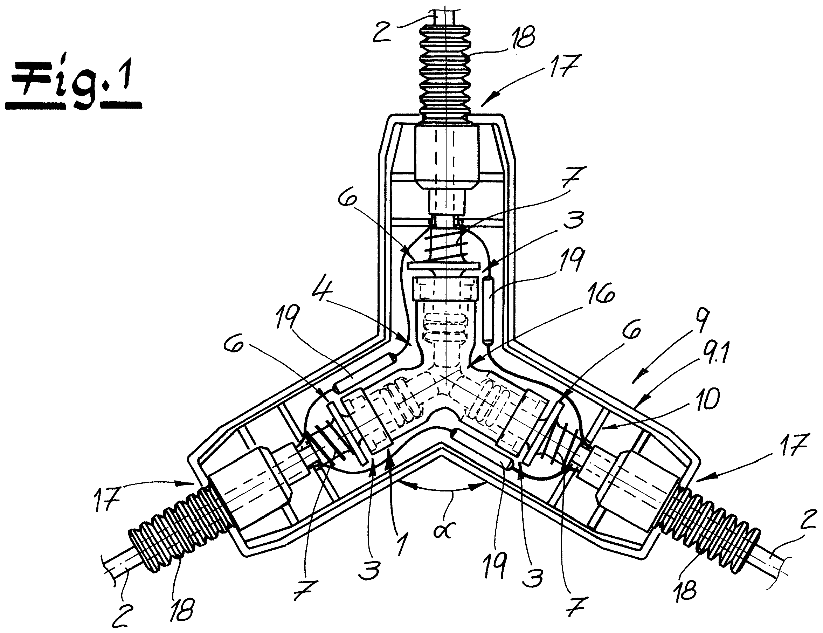

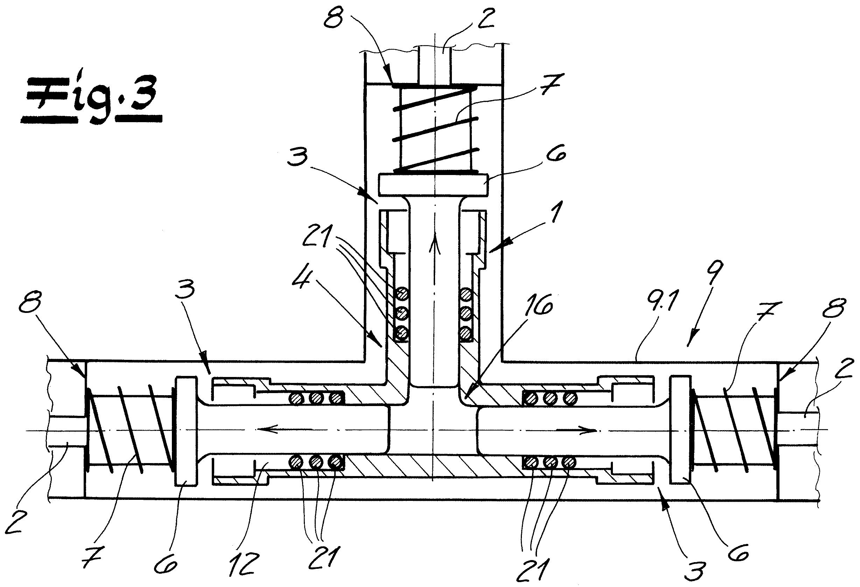

Im Ausführungsbeispiel weist der Verbinder 1 drei Anschlussenden 3 auf sowie einen die drei Anschlussenden 3 miteinander verbindenden Verbinderabschnitt 4. Die Fluidleitungsenden 5 der drei Fluidleitungen 2 greifen jeweils in ein Anschlussende 3 des Verbinders ein und ragen im Ausführungsbeispiel bis in einen Mittelabschnitt 16 des Verbinders 1. Der Verbinder weist im Ausführungsbeispiel nach Fig. 1 eine Y-förmige Ausgestaltung auf und jeweils zwei der drei Anschlussenden 3 schließen einen Winkel α von 120° ein. Die Ausgestaltung des Verbinders 1 und der daran angeschlossenen Fluidleitungen 2 ist im Ausführungsbeispiel gemäß Fig. 1 gleichsam sternförmig. - In der Fig. 3 ist die Funktionsweise des erfindungsgemäßen Verbindungsaggregates schematisch dargestellt. Hier ist der Verbinder 1 bzw. das Verbindungsaggregat vereinfacht T-förmig gezeigt. Grundsätzlich kann der Verbinder 1 auch eine solche T-förmige Ausgestaltung aufweisen.

Vorzugsweise und im Ausführungsbeispiel ist im Bereich jedes Fluidleitungsendes 5 der Fluidleitungen 2 jeweils ein Kompensationselement 6 an die Fluidleitung 2 bzw. an das Fluidleitungsende 5 angeschlossen. Zweckmäßigerweise und im Ausführungsbeispiel sind die Kompensationselemente 6 in Form von Kompensationsflanschen ausgebildet, die bezüglich der zugeordneten Fluidleitung 2 bzw. des zugeordneten Fluidleitungsendes 5 rotationssymmetrisch ausgeführt sind. Bewährtermaßen und im Ausführungsbeispiel sind die Kompensationselemente 6 bzw. Kompensationsflansche jeweils vor einem Stirnende eines Anschlussendes 3 des Verbinders 1 angeordnet. Empfohlenermaßen und im Ausführungsbeispiel sind die Kompensationselemente 6 bzw. Kompensationsflansche fest mit der jeweiligen Fluidleitung 2 verbunden, bevorzugt stoffschlüssig und/oder kraftschlüssig mit der Fluidleitung 2 verbunden und insbesondere an die Fluidleitung 2 bzw. an das Fluidleitungsende 5 angeschweißt.

Erfindungsgemäß ist ein Kompensationselement 6 über ein Federelement 7 an einem Abstützanschlag 8 abstützbar. Das Federelement 7 ist bevorzugt und im Ausführungsbeispiel als Schraubenfeder ausgebildet. - Aufgrund einer Druckerhöhung bzw. Volumenerhöhung im Verbinderabschnitt 4, insbesondere aufgrund der Bildung eines Eisdruckes im Verbinderabschnitt 4, ist ein Kompensationselement 6 unter Vergrößerung des Innenvolumens 15 des Verbinderabschnittes 4 gegen die Rückstellkraft des Federelementes 7 bzw. der Schraubenfeder in Richtung Abstützanschlag 8 verschiebbar. Das ist in den Figuren durch einen Doppelpfeil angedeutet worden.

Zweckmäßigerweise und im Ausführungsbeispiel ist ein den Verbinder 1 aufnehmendes Verbindergehäuse 9 vorgesehen. Das Verbindergehäuse 9 ist im Ausführungsbeispiel gemäß Fig. 1 wie der Verbinder 1 Y-förmig ausgestaltet und jedem Anschlussende 3 des Verbinders 1 ist zweckmäßigerweise und im Ausführungsbeispiel ein Gehäuseanschlussabschnitt 17 zugeordnet. Bewährtermaßen und im Ausführungsbeispiel weisen die Fluidleitungen 2 jeweils eine Leitungsumhüllung 18 auf, die bevorzugt und im Ausführungsbeispiel jeweils als Wellrohr ausgebildet ist. Vorzugsweise und im Ausführungsbeispiel greifen die Fluidleitungen 2 mit ihrer Leitungsumhüllung 18 jeweils in einen Gehäuseanschlussabschnitt 17 des Verbindergehäuses 9 ein. Dabei sind bevorzugt und im Ausführungsbeispiel die Leitungsumhüllungen 18 bzw. die Wellrohre formschlüssig an den Enden der Gehäuseanschlussabschnitte 17 des Verbindergehäuses 9 fixiert.

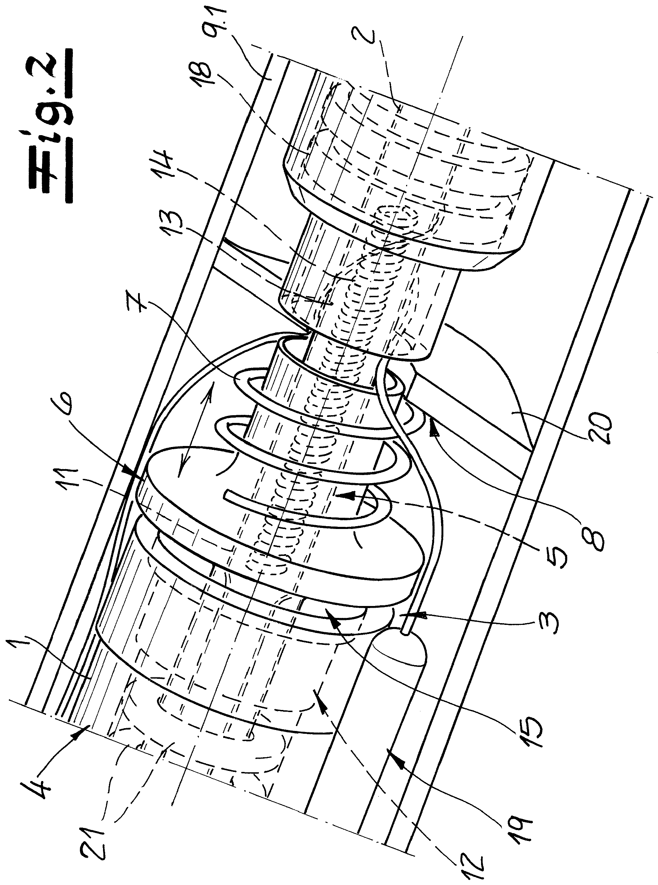

Zweckmäßigerweise und im Ausführungsbeispiel sind die in die Anschlussenden 3 des Verbinders 1 eingreifenden Fluidleitungsenden 5 sowie die im Bereich der Fluidleitungsenden 5 jeweils angeschlossenen Kompensationselemente 6 mitsamt ihren zugeordneten Federelementen 7 in dem Verbindergehäuse 9 aufgenommen. Vorzugsweise und im Ausführungsbeispiel ist jeweils ein Abstützanschlag 8 für ein Kompensationselement 6 ebenfalls in dem Verbindergehäuse 9 angeordnet und empfohlenermaßen und im Ausführungsbeispiel sind die Abstützanschläge 8 Bestandteil des Verbindergehäuses 9. Dabei sind bevorzugt und im Ausführungsbeispiel die Abstützanschläge 8 als senkrecht zur Längsrichtung der zugeordneten Fluidleitung 2 bzw. des zugeordneten Fluidleitungsendes 5 angeordnete Gehäusewandungen 10 des Verbindergehäuses 9 ausgebildet. Zweckmäßigerweise und im Ausführungsbeispiel sind dabei die Gehäusewandungen 10 einstückige Bestandteile des Verbindergehäuses 9. - Bevorzugt und im Ausführungsbeispiel besteht das Verbindergehäuse 9 aus zwei Halbschalen, von denen in den Fig. 1 und 2 lediglich eine Halbschale 9.1 dargestellt ist. Jede Halbschale 9.1 weist bevorzugt und im Ausführungsbeispiel Gehäusewandungsteile 20 auf, die sich beim Zusammenfügen der Halbschale 9.1 zu den die Abstützanschläge 8 bildenden Gehäusewandungen 10 ergänzen.

In den Figuren ist erkennbar, dass ein Kompensationselement 6 aus der Außenoberfläche 11 des zugeordneten Fluidleitungsendes 5 bzw. der zugeordneten Fluidleitung 2 herausragt und zwar bevorzugt und im Ausführungsbeispiel senkrecht zur Längsrichtung des zugeordneten Fluidleitungsendes 5 bzw. der zugeordneten Fluidleitung 2 herausragt. Es wurde bereits oben dargelegt, dass das Kompensationselement 6 bevorzugt als die Fluidleitung 2 bzw. das Fluidleitungsende 5 umgebender Kompensationsflansch ausgebildet ist. Das Federelement 7 ist jeweils zwischen dem Kompensationselement 6 bzw. dem Kompensationsflansch und dem Abstützanschlag 8 angeordnet. Dabei ist das Kompensationselement 6 zweckmäßigerweise und im Ausführungsbeispiel außerhalb des Verbinders 1 und innerhalb des Verbindergehäuses 9 platziert.

Bei einer Volumenerhöhung bzw. Druckerhöhung im Verbinderabschnitt 4 des Verbinders 1 wird das jeweilige Fluidleitungsende 5 gleichsam aus dem Verbinder 1 herausgedrückt, wobei das daran angeschlossene Kompensationselement 6 gegen die Rückstellkraft des Federelementes 7 in Richtung Abstützanschlag 8 verschoben bzw. gedrückt wird. Das ist in Fig. 3 sehr schematisch dargestellt. Hier ist weiterhin erkennbar, dass bevorzugt und im Ausführungsbeispiel O-Ringe 21 zwischen den verschiebbaren Fluidleitungsenden 5 und den Anschlussenden 3 des Verbinders 1 abdichten.

Nach empfohlener Ausführungsform und im Ausführungsbeispiel sind die Fluidleitungen 2 als beheizbare Fluidleitungen 2 ausgebildet. Vorzugsweise ist dazu zumindest eine in den Figuren nicht dargestellte Heizkomponente, insbesondere ein Heizdraht um die jeweilige Fluidleitung 2 gewickelt. Vorzugsweise und im Ausführungsbeispiel ist auch der Verbinder 1 als beheizbarer Verbinder 1 ausgeführt. Zweckmäßigerweise ist dazu jeweils ein aus einer Fluidleitung 2 herausragendes Heizelement 14 vorgesehen, das in einen Fluidkanal 12 des Verbinders 1 hineinragt. Zweckmäßigerweise und im Ausführungsbeispiel ist dieses Heizelement 14 auch in dem Innenraum 13 der Fluidleitung 2 angeordnet. Vorzugsweise und im Ausführungsbeispiel ist das Heizelement 14 als Schraubenfeder ausgebildet. Dieses Heizelement 14 bzw. die Schraubenfeder wird gleichsam durch die Beheizung der Fluidleitung 2 beheizt und die Wärme wird über das Heizelement 14 bzw. über die Schraubenfeder in den Fluidkanal 12 des Verbinders 1 geleitet, so dass hier auch der Fluidkanal 12 bzw. der Innenraum des Verbinders 1 beheizt wird. Im Ausführungsbeispiel sind im Übrigen Crimpverbindungen 19 erkennbar, über die Heizkomponenten zur Beheizung der Fluidleitungen 2 miteinander verbunden sind. Insbesondere in der Fig. 2 ist erkennbar, dass nach bevorzugter Ausführungsform und im Ausführungsbeispiel ein Kompensationselement 6 bzw. ein Kompensationsflansch das für die Beheizung des Verbinders 1 jeweils vorgesehene Heizelement 14 umgibt.

## Patentansprüche

1. Verbindungsaggregat mit einem Verbinder (1) und zumindest einer an den Verbinder (1) angeschlossenen Fluidleitung (2), insbesondere zur Durchleitung einer wässrigen Harnstofflösung, wobei der Verbinder (1) zumindest zwei Anschlussenden (3) sowie einen die Anschlussenden (3) miteinander verbindenden Verbinderabschnitt (4) aufweist,
wobei zumindest ein Fluidleitungsende (5) einer Fluidleitung (2) zumindest in ein Anschlussende (3) des Verbinders (1) eingreift, wobei im Bereich des Fluidleitungsendes (5) der Fluidleitung (2) zumindest ein Kompensationselement (6) an die Fluidleitung (2) bzw. an das Fluidleitungsende (5) angeschlossen ist, wobei das Kompensationselement (6) über zumindest ein Federelement (7) an zumindest einem Abstützanschlag (8) abstützbar ist
wobei aufgrund einer Druckerhöhung im Verbinderabschnitt (4), insbesondere aufgrund der Bildung eines Eisdruckes im Verbinderabschnitt (4), das Kompensationselement (6) unter Vergrößerung des Innenvolumens (15) des Verbinderabschnittes (4) gegen die Rückstellkraft des Federelementes (7) in Richtung Abstützanschlag (8) verschiebbar ist,
**dadurch gekennzeichnet, dass** ein den Verbinder (1) aufnehmendes Verbindergehäuse (9) vorgesehen ist wobei zumindest ein in ein Anschlussende (3) des Verbinders (1) eingreifendes Fluidleitungsende (5) sowie das im Bereich des Fluidleitungsendes (5) angeschlossene Kompensationselement (6) mitsamt zugeordnetem Federelement (7) in dem Verbindergehäuse (9) aufgenommen sind
und wobei das Kompensationselement (6) außerhalb des Verbinders (1) und innerhalb des Verbindergehäuses (9) angeordnet ist.

2. Verbindungsaggregat nach Anspruch 1, wobei der Verbinder (1) zumindest drei Anschlussenden (3), insbesondere drei Anschlussenden (3) aufweist, wobei der Verbinderabschnitt (4) die zumindest drei Anschlussenden (3) miteinander verbindet.

3. Verbindungsaggregat nach Anspruch 2, wobei jeweils zwei der drei Anschlussenden (3) einen Winkel von 120° bzw. von etwa 120° einschließen.

4. Verbindungsaggregat nach einem der Ansprüche 1 bis 3, wobei an zumindest zwei Anschlussenden (3), vorzugsweise an jedem Anschlussende (3) des Verbinders (1) ein Fluidleitungsende (5) einer Fluidleitung (2) in das Anschlussende (3) eingreift, wobei im Bereich jedes Fluidleitungsendes (5) zumindest ein Kompensationselement (6) an die Fluidleitung (2) bzw. an das Fluidleitungsende (5) angeschlossen ist und wobei jedes Kompensationselement (6) über jeweils zumindest ein Federelement (7) an zumindest einem Abstützanschlag (8) abstützbar ist bzw. abgestützt ist.

5. Verbindungsaggregat nach einem der Ansprüche 1 bis 4, wobei zumindest ein Abstützanschlag (8) für zumindest ein Kompensationselement (6) in dem Verbindergehäuse (9) angeordnet ist und vorzugsweise Bestandteil des Verbindergehäuses (9) ist.

6. Verbindungsaggregat nach einem der Ansprüche 1 bis 5, wobei ein Abstützanschlag (8) als quer, vorzugsweise als senkrecht bzw. als im Wesentlichen senkrecht zur Längsrichtung der zugeordneten Fluidleitung (2) bzw. des zugeordneten Fluidleitungsendes (5) angeordnetes Gehäuseelement - insbesondere als Gehäusewandung (10) - des Verbindergehäuses (9) ausgebildet ist.

7. Verbindungsaggregat nach einem der Ansprüche 1 bis 6, wobei das Kompensationselement (6) fest mit dem zugeordneten Fluidleitungsende (5) bzw. mit der zugeordneten Fluidleitung (2) verbunden ist.

8. Verbindungsaggregat nach Anspruch 7, wobei das Kompensationselement (6) stoffschlüssig und/oder formschlüssig und/oder kraftschlüssig mit dem zugeordneten Fluidleitungsende (5) bzw. mit der zugeordneten Fluidleitung (2) verbunden ist.

9. Verbindungsaggregat nach einem der Ansprüche 1 bis 8, wobei das Kompensationselement (6) aus der Außenoberfläche (11) des zugeordneten Fluidleitungsendes (5) bzw. der zugeordneten Fluidleitung (2) herausragt.

10. Verbindungsaggregat nach einem der Ansprüche 1 bis 9, wobei das Kompensationselement (6) einen quer, insbesondere senkrecht bzw. im Wesentlichen senkrecht zur Längsrichtung des zugeordneten Fluidleitungsendes (5) bzw. der zugeordneten Fluidleitung (2) angeordneten Kompensationsflansch aufweist, welcher Kompensationsflansch über das zumindest eine Federelement (7) an dem Abstützanschlag (8) abstützbar ist bzw. abgestützt wird.

11. Verbindungsaggregat nach einem der Ansprüche 1 bis 10, wobei die Fluidleitung (2) als beheizbare Fluidleitung (2) ausgebildet ist und/oder wobei der Verbinder (1) als beheizbarer Verbinder (1) ausgebildet ist.

12. Verbindungsaggregat nach einem der Ansprüche 1 bis 11, wobei der Verbinder (1) mit zumindest einem in einen Fluidkanal (12) des Verbinders (1) und/oder in den Innenraum (13) eines Fluidleitungsendes (5) hineinragenden Heizelement (14) beheizbar ist bzw. beheizt wird.

13. Verbindungsaggregat nach Anspruch 12, wobei das/ein Kompensationselement (6) ein zur Beheizung des Verbinders (1) vorgesehenes Heizelement (14) umgibt.

## Claims

1. A connecting assembly with a connector (1) and at least one fluid line (2) hooked up to the connector (1), in particular for conducting an aqueous urea solution, wherein the connector (1) has at least two terminal ends (3) as well as a connector section (4) that connects the terminal ends (3) with each other,
wherein at least one fluid line end (5) of a fluid line (2) engages into at least one terminal end (3) of the connector (1), wherein at least one compensation element (6) is hooked up to the fluid line (2) or to the fluid line end (5) in the area of the fluid line end (5) of the fluid line (2), wherein the compensation element (6) can be supported by a least one spring element (7) on at least one support stop (8),
wherein, by increasing the pressure in the connector section (4), in particular by generating an ice pressure in the connector section (4), the compensation element (6) can be moved against the restoring force of the spring element (7) in the direction of the support stop (8) as the interior volume (15) of the connector section (4) increases,
**characterized in that** a connector housing (9) that receives the connector (1) is provided, wherein the connector housing (9) incorporates at least one fluid line end (5) engaging into a terminal end (3) of the connector (1) as well as the compensation element (6) hooked up in the area of the fluid line end (5) including the allocated spring element (7),
and wherein the compensation element (6) is arranged outside of the connector (1) and inside of the connector housing (9).

2. The connecting assembly according to claim 1, wherein the connector (1) has at least three terminal ends (3), in particular three terminal ends (3), wherein the connector section (4) connects the at least three terminal ends (3) with each other.

3. The connecting assembly according to claim 2, wherein a respective two of the three terminal ends (3) include an angle of 120° or of about 120°.

4. The connecting assembly according to one of claims 1 to 3, wherein a fluid line end (5) of a fluid line (2) engages into the terminal end (3) at least at two terminal ends (3), preferably at each terminal end (3) of the connector (1), wherein at least one compensation element (6) is hooked up to the fluid line (2) or to the fluid line end (5) in the area of each fluid line end (5), and wherein each compensation element (6) can be supported or is supported on at least one support stop (8) by at least one respective spring element (7).

5. The connecting assembly according to one of claims 1 to 4, wherein at least one support stop (8) for at least one compensation element (6) is arranged in the connector housing (9), and is preferably a component of the connector housing (9).

6. The connecting assembly according to one of claims 1 to 5, wherein a support stop (8) is designed as a transverse housing element, preferably as one arranged perpendicular or essentially perpendicular to the longitudinal direction of the allocated fluid line (2) or the allocated fluid line end (5), in particular as a housing wall (10), of the connector housing (9).

7. The connecting assembly according to one of claims 1 to 6, wherein the compensation element (6) is fixedly connected with the allocated fluid line end (5) or with the allocated fluid line (2).

8. The connecting assembly according to claim 7, wherein the compensation element (6) is integrally and/or positively and/or non-positively connected with the allocated fluid line end (5) or with the allocated fluid line (2).

9. The connecting assembly according to one of claims 1 to 8, wherein the compensation element (6) protrudes out of the outer surface (11) of the allocated fluid line end (5) or the allocated fluid line (2).

10. The connecting assembly according to one of claims 1 to 9, wherein the compensation element (6) has a transverse compensation flange, in particular one arranged perpendicular or essentially perpendicular to the longitudinal direction of the allocated fluid line end (5) or allocated fluid line (2), wherein said compensation flange can be supported or is supported by the at least one spring element (7) on the support stop (8) .

11. The connecting assembly according to one of claims 1 to 10, wherein the fluid line (2) is designed as a heatable fluid line (2) and/or wherein the connector (1) is designed as a heatable connector (1).

12. The connecting assembly according to one of claims 1 to 11, wherein the connector (1) can be heated or is heated with at least one heating element (14) that protrudes into a fluid channel (12) of the connector (1) and/or into the interior (13) of a fluid line end (5).

13. The connecting assembly according to claim 12, wherein the/a compensation element (6) envelops a heating element (14) provided for heating the connector (1).

## Revendications

1. Ensemble de liaison avec un raccord (1) et au moins une conduite de fluide (2) raccordée au raccord (1), en particulier pour faire passer une solution d'urée aqueuse, sachant que le raccord (1) comporte au moins deux extrémités de raccordement (3) ainsi qu'une section de raccord (4) reliant les extrémités de raccordement (3) entre elles,
sachant qu'au moins une extrémité de conduite de fluide (5) d'une conduite de fluide (2) vient en prise au moins dans une extrémité de raccordement (3) du raccord (1), sachant que dans la zone de l'extrémité de conduite de fluide (5) de la conduite de fluide (2) au moins un élément de compensation (6) est raccordé à la conduite de fluide (2) ou à l'extrémité de conduite de fluide (5), sachant que l'élément de compensation (6) peut être appuyé par le biais d'au moins un élément à ressort (7) sur au moins une butée d'appui (8),
sachant qu'en raison d'une hausse de pression dans la section de raccord (4), en particulier en raison de la formation d'une pression de glace dans la section de raccord (4), l'élément de compensation (6) peut être déplacé par augmentation du volume intérieur (15) de la section de raccord (4) en s'opposant à la force de rappel de l'élément à ressort (7) en direction de la butée d'appui (8),
**caractérisé en ce que**
un boîtier de raccord (9) logeant le raccord (1) est prévu, sachant qu'au moins qu'une extrémité de conduite de fluide (5) venant en prise dans une extrémité de raccordement (3) du raccord (1) et l'élément de compensation (6) raccordé dans la zone de l'extrémité de conduite de fluide (5) y compris l'élément à ressort (7) attribué sont logés dans le boîtier de raccord (9) et sachant que l'élément de compensation (6) est disposé en dehors du raccord (1) et à l'intérieur du boîtier de raccord (9).

2. Ensemble de liaison selon la revendication 1, sachant que le raccord (1) comporte au moins trois extrémités de raccordement (3), en particulier trois extrémités de raccordement (3), sachant que la section de raccord (4) relie au moins les trois extrémités de raccordement (3) entre elles.

3. Ensemble de liaison selon la revendication 2, sachant que deux des trois extrémités de raccordement (3) forment respectivement un angle de 120° ou d'environ 120°.

4. Ensemble de liaison selon l'une quelconque des revendications 1 à 3, sachant que sur au moins deux extrémités de raccordement (3), de préférence sur chaque extrémité de raccordement (3) du raccord (1), une extrémité de conduite de fluide (5) d'une conduite de fluide (2) vient en prise dans l'extrémité de raccordement (3), sachant que dans la zone de chaque extrémité de conduite de fluide (5) au moins un élément de compensation (6) est raccordé à la conduite de fluide (2) ou à l'extrémité de conduite de fluide (5) et sachant que chaque élément de compensation (6) peut être appuyé ou est appuyé par le biais respectivement d'au moins un élément à ressort (7) sur au moins une butée d'appui (8).

5. Ensemble de liaison selon l'une quelconque des revendications 1 à 4, sachant qu'au moins une butée d'appui (8) est disposée dans le boîtier de liaison (9) pour au moins un élément de compensation (6) et est de préférence une partie constituante du boîtier de liaison (9).

6. Ensemble de liaison selon l'une quelconque des revendications 1 à 5, sachant qu'une butée d'appui (8) est constituée comme un élément de boîtier en particulier comme une paroi de boîtier (10), du boîtier de liaison (9), disposé transversalement, de préférence perpendiculairement ou pour l'essentiel perpendiculairement à la direction longitudinale de la conduite de fluide (2) attribuée ou de l'extrémité de conduite de fluide (5) attribuée.

7. Ensemble de liaison selon l'une quelconque des revendications 1 à 6, sachant que l'élément de compensation (6) est relié fermement à l'extrémité de conduite de fluide (5) attribuée ou à la conduite de fluide (2) attribuée.

8. Ensemble de liaison selon la revendication 7, sachant que l'élément de compensation (6) est relié par conformité de matière et/ou conformité de forme et/ou conformité de force à l'extrémité de conduite de fluide (5) attribuée ou à la conduite de fluide (2) attribuée.

9. Ensemble de liaison selon l'une quelconque des revendications 1 à 8, sachant que l'élément de compensation (6) dépasse de la surface extérieure (11) de l'extrémité de conduite de fluide (5) attribuée ou de la conduite de fluide attribuée (2).

10. Ensemble de liaison selon l'une quelconque des revendications 1 à 9, sachant que l'élément de compensation (6) comporte une bride de compensation disposée transversalement, en particulier perpendiculairement ou pour l'essentiel perpendiculairement à la direction longitudinale de l'extrémité de conduite de fluide (5) attribuée ou à la conduite de fluide (2) attribuée, laquelle bride de compensation peut être appuyée ou est appuyée par le biais d'au moins un élément à ressort (7) sur la butée d'appui (8).

11. Ensemble de liaison selon l'une quelconque des revendications 1 à 10, sachant que la conduite de fluide (2) est constituée comme une conduite de fluide (2) pouvant être chauffée et/ou sachant que le raccord (1) est constitué comme un raccord (1) pouvant être chauffé.

12. Ensemble de liaison selon l'une quelconque des revendications 1 à 11, sachant que le raccord (1) peut être chauffé ou est chauffé avec au moins un élément de chauffage (14) faisant saillie dans u conduit de fluide (12) su raccord (1) et/ou dans le compartiment intérieur (13) d'une extrémité de conduite de fluide (5).

13. Ensemble de liaison selon la revendication 12, sachant que le/un élément de compensation (6) entoure un élément chauffant (14) prévu pour le chauffage du raccord (1).
